# EUROPEAN PATENT APPLICATION

(11) **EP 4 404 457 A1**
(43) Date of publication of application: **24.07.2024**
(21) Application number: 21956980.3
(22) Date of filing: 15.09.2021
(51) Int. Cl.: H02S 40/10, B08B 1/00, B08B 1/04, H02S 40/00

(54) **DEVICE AND METHOD FOR AUTOMATICALLY CLEANING THE SURFACE OF AT LEAST ONE MEASURING DEVICE USED IN SOLAR INSTALLATIONS**

(71) Applicant: Inti-Tech SPA, La Reina Santiago (CL)
(72) Inventor: CONTRERAS HERRERA, Camilo Antonio, Santiago (CL); MARABOLI CONTARDO, Luis Robinson, Santiago (CL); GARCIA ACEVEDO, Carlos Alberto, Santiago (CL); FLORES GARRIDO, Camilo Emmanuel, Santiago (CL); LE COSTAOUEC, Vincent, Santiago (CL)
(74) Representative: Hoffmann Eitle
(86) International application number: PCT/CL2021/050086
(87) International publication number: WO 2023/039684

(57) **Abstract**

A device (1) and method for automatically cleaning the surface of at least one measuring device (100) used in solar installations, wherein the device (1) comprises at least one base platform (10); at least one movable arm (11) attached to the at least one base platform (10); at least a first driving means (12) attached to one end of the at least one movable arm (11); at least one cleaning element (13) to clean the surface of the at least one measuring device (100) and connected to one end of the at least one first driving means (12) to allow its rotation; at least one second driving means (14) to allow the rotation of the at least one movable arm (11) around the at least one measuring device (100); and at least one control means (15) to control the operation of the at least one first driving means (12) and of the at least one second driving means (14).

## Description

The present invention relates to a device and method to automatically clean one or more devices or measuring devices that have a surface that requires cleaning, generally used in solar installations, such as photovoltaic plants or in places where it is necessary to obtain data about the operation of the plant, without interfering in the operation of these devices or apparatus and without intervening their structural components.

Specifically, the device and method of the invention provides a solution to automatically clean the surface of devices, such as pyranometers, which measures incident solar irradiance at the place of operation, wherein the present cleaning device is integrated to the pyranometer, in order to maintain its upper surface with an optimal level of cleanliness to obtain precise irradiance measurements.

In this sense, the device of the invention essentially comprises at least one base platform; at least one movable arm attached to the at least one base platform; at least one first driving means attached to one end of the at least one movable arm; at least one cleaning element to clean the surface of the at least one measuring device and connected to one end of the at least one first driving means to allow its rotation; at least one second driving means to allow the rotation of the at least one movable arm around the at least one measuring device; and at least one control means for controlling the operation of the at least one first driving means and of the at least one second driving means.

On the other hand, the method of the invention essentially comprises the steps of actuating at least one second driving means through at least one control means; mobilizing at least one movable arm arranged on a side face of at least one base platform to a position in which at least one cleaning element makes contact with the surface of the at least one measuring device; actuate at least a first driving means through the at least one control means; and initiating a rotary movement of the at least one cleaning element so as to clean the surface of the at least one measuring device.

From the device and method of the invention it is possible to keep the upper surface of the at least one measuring device clean, removing the impregnated dirt, such as dust and other elements that may decrease the accuracy of its measurements, all this through an inexpensive device that is easy to manufacture, which also reduces the operating and maintenance costs of the device.

### BACKGROUND

At present, the photovoltaic and solar thermal power generation industry has grown exponentially in several countries around the world especially in places where there is a high and continuous solar radiation during the year. This is mainly due to the environmental agreements committed by various countries and the sustained low cost of electricity production through this type of renewable energy plants, being increasingly competitive compared to conventional generation plants that use fossil fuels. That is why today one of the main challenges of this industry is to maximize energy production during the day, which is the time slot where the solar plant is capable of absorbing incident radiation.

In order to approach the maximum efficiency in the operation of the solar plant, multiple sensors and devices are used to measure different variables in the place where the photovoltaic panels, mirrors and / or cylinders are operating, depending on the technology used by the plant.

One of these devices corresponds to the one commonly known as a pyranometer which is a precision meteorological instrument that quantifies the incident solar irradiance on its place of operation collecting the irradiance in a field of up to 180° being able to measure three types of radiation, the total hemispherical, the diffuse and the direct radiation. This radiation is collected by a thermocouple sensor after it has passed through two transparent domes arranged on the surface of the device. Said transparent domes are fundamental for a correct measurement of irradiance, since any type of dirt that may be on their surface will cause the measured irradiance to be less than that actually existing in the place which will lead to a poor decision-making by the operators of the solar plant.

In view of the foregoing, a solution is needed that aims to keep the surface of the outer dome of pyranometers free of dirt, in order to provide a accurate and reliable measurement at all times.

On the other hand, the industry also requires that all or the vast majority of the tasks carried out in the solar plant be carried out in an automated way, in order to avoid the intervention or dependence of operators and / or people to carry them out. Therefore, it is also necessary a solution that allows cleaning tasks to be carried out automatically and reliably ensuring that such cleaning tasks were carried out correctly.

In the field of patents there are some solutions aimed at cleaning the surface of pyranometers. For example, Spanish Patent Application ES2656737A1 describes a low maintenance system for recording solar radiation with a ventilated pyranometer, a shading band and a structure with mobile supports. Such system is designed to work autonomously with cleaning means to clean the sensor by blowing with compressed air and brushing; means for guiding the shading band and a protection arm; power means comprising a battery and a solar panel; control means with a control card coupled with the guide means to establish the position of the shading band with respect to the sensor establishing measurement intervals of sun, shade, inactivity, according to geographical location, calendar date, time of day, and response time of the pyranometer. In this sense, although document ES2656737A1 also describes a system to clean the surface of a pyranometer, the difference with the device of the invention is in the simplicity of installation and operation of the present device avoiding being an invasive element within the operation of the pyranometer wherein the system of document ES2656737A1 has a series of mechanical components and sensors that make it more complex and expensive from the point of view of its installation, operation and maintenance. In addition, the system of document ES2656737A1 is only designed to operate with a specific brand and model of pyranometer not being able to operate with other pyranometers with similar characteristics which is possible through the device of the present invention thanks to the simplicity of its performance and operation.

Another example is disclosed in Japanese Patent Application JP2020205696A, which describes a power generation management system which comprises a pyrheliometer and a series of pyranometers, in order to be able to evaluate the performance of a photovoltaic plant. Although, said document describes that it has a cleaning unit, this is not described in detail only indicating that it can be a cloth and that it is only used to clean the surface of the pyrheliometer and not that of the pyranometers. On the other hand, it is observed that the system has an articulated arm similar to that of the invention device. However, said arm has a totally different functionality from that of the invention device being used in said document to block direct light on a conversion unit.

Finally, US Patent Application US2011030728A1 describes a pyranometer which includes a sensor and a radiation-transparent dome that surrounds the sensor. The pyranometer also includes one or more fluid nozzles which are adapted to apply a fluid on the radiation-transparent dome in order to clean the surface of such dome. In this case, the teachings of document US2011030728A1 are completely different from what is described by the device of the present invention since they contemplate the physical intervention of the pyranometer which can lead to various problems, such as loss of product warranty in case of a failure or malfunction which does not occur with the device of the invention, for which the pyranometer does not need to be intervened in any way.

In view of the state of the prior art, it is relevant to highlight the adaptability of the device of the present invention which can operate in conjunction with most pyranometers on the market thanks to its design capable of cleaning the surface of this type of devices independent of their particular characteristics according to the model or brand, thus reducing the costs associated with the design, manufacture and installation of each particular solution. In this sense, it is also important to highlight that the device of the invention can operate at various angles depending on the orientation of the pyranometer dome which could be pointing, for example, towards the sky in order to be able to measure radiation that receives the front face of a photovoltaic panel directly from the sun, or it could be pointing towards the ground in order to be able to measure the radiation that the rear face of a bifacial photovoltaic panel receives. Additionally, thanks to this advantage in terms of adapting the cleaning device and method of the invention, it is also possible to use it with other measuring devices for which surface cleaning is required, in view of the ease of scalability of its components.

Therefore, it is necessary to have a cleaning device for measuring devices in solar installations, such as pyranometers, which is able not only of keeping its surface clean but is also able to address other issues, such as the provision of a cleaning device that minimizes the amount of components and cleaning means for its correct operation but always ensuring correct cleaning that is adaptable to multiple models and brands of pyranometers and allows an installation avoiding intervention of the pyranometer, both in its operation and in its structural components, to carry out the cleaning tasks automatically without the need for the presence of people or operators to supervise its operation, among other associated problems. This and other advantages associated with other aspects of the technology are described in greater detail below.

### DESCRIPTION OF THE INVENTION

The invention relates to a device and method for automatically cleaning the surface of at least one measuring device in solar installations, such as pyranometers which allow the cleaning process to be carried out without intervening in the operation and in the measurement device structural components. Furthermore, the present invention provides a cleaning device that has a superior adaptability to existing cleaning systems in the state of the art being able to operate with most models and brands of pyranometers on the market. This is due to the fact that the cleaning device of the present invention has been carried out with a low cost of design, manufacture and installation, thus obtaining a device that meets the same objective as other complex and expensive cleaning systems but with considerably less structural components.

Regarding the functions, objectives and advantages of the cleaning device of the invention, the following can be listed:
- Does not scratch and / or impair the integrity of the outer dome or the pyranometer's solar protective housing.
- The dust collected by the cleaning element or brush is avoided to be deposited on the surface of the pyranometer, as said component is hidden by the lower side of the cleaning device below the pyranometer.
- It is capable of preprogrammed automatic cleaning or through an instruction received wirelessly either through a direct order from an operator or through a decision made by the device in view of multiple variables of the operating environment.
- It adapts itself and does not interfere with the use of accessories and fixings of the pyranometer.
- Performs a dry cleaning of at least the integrity of the outer dome of the pyranometer.
- It guarantees a cleanliness that ensures the correct calculation of the operating variables of a solar plant such as the coefficient of performance PR (Performance Ratio) of a solar plant.
- Provides a universal design for any use of pyranometer accessory sets.
- Optionally, it provides a wet cleaning and / or through compressed air.
- It has a mechanism that allows it to self-clean and / or renew the medium used to clean.

According to a first preferred embodiment of the invention, for automatically cleaning the surface of at least one measuring device in solar installations, the device comprises:
- at least one base platform;
- at least one movable arm attached to the at least one base platform;
- at least one first driving means attached to one end of the at least one movable arm;
- at least one cleaning element to clean the surface of the at least one measuring device and connected to one end of the at least one first driving means to allow its rotation;
- at least one second driving means to allow the rotation of the at least one movable arm around the at least one measuring device; and
- at least one control means to control the operation of the at least one first driving means and of the at least one second driving means.

This arrangement of the cleaning device components makes it possible that no structural component or accessory of the measuring device is required to be intervened which can continue operating normally after the installation of the cleaning device. This is extremely important, since by not intervening in any way the measuring device the possible guarantees associated with the product remain unaltered, wherein most cases the product loses all kinds of guarantee when intervened. On the other hand, the cleaning device of the invention by operating automatically avoids the presence of operators or people who must handle or supervise its correct operation. This prevents people from having to make constant trips to the solar plant contributing to lower costs and operating efficiency in the plant. In addition, particularly the cleaning device is able of adapting to the vast majority of measurement device models such as pyranometers existing on the market wherein it will be enough to adapt the length of the movable arm, as well as the size of the cleaning element to fit a model of pyranometer or other model of a specific measuring device.

According to another embodiment of the invention, the device further comprises at least one support base arranged on the at least one base platform in order to locate the at least one measuring device. This helps the measuring device to be arranged at a higher height thus preventing any component of the cleaning device from interfering with its normal operation or projecting shade on its surface.

According to another embodiment of the invention, the at least one cleaning element corresponds to at least one of a brush, a cloth or any element that allows the cleaning of a surface.

According to another embodiment of the invention, the at least one movable arm is attached to the at least one base platform in such a way as to allow its rotation along the transverse axis of the at least one cleaning device. Optionally, the at least one movable arm is attached to the at least one base platform in such a way as to allow its rotation along the axial axis of the at least one measuring device. Thanks to these two location options for the movable arm with respect to the measuring device it is possible to locate said movable arm in the best possible position considering multiple factors such as the path of the sun and the location of additional accessories of the measuring device and / or the solar plant itself, among others.

According to another embodiment of the invention, the device further comprises at least two travel stop elements arranged on a side face of the at least one base platform. Said elements help the movable arm to only move between two fixed positions, an initial or rest position wherein the movable arm is with its upper end pointing downward, and a final or operating position wherein the upper end of the movable arm is located on the upper surface of the measuring device specifically on the dome in the case of pyranometers in order to begin the process of cleaning its surface. This prevents the movable arm from being in a position other than the one established to obtain a correct cleaning and / or in a rest position that interferes with the normal operation of the measuring device or with other elements of the solar plant.

According to another embodiment of the invention, the device further comprises at least one position sensor arranged on a side face of the at least one base platform. Optionally, the device further comprises at least two position sensors arranged on a side face of the at least one base platform. Said sensors are important to verify that the movable arm is actually in its initial or final position depending on the stage in which the cleaning process is located wherein if it is verified that the movable arm is in a position other than one of these two established positions, the corresponding corrective actions must be taken by the control means to bring the movable arm to the correct position. In this sense, the cleaning device of the invention may have as many position sensors as freedom of movement degrees to carry out the cleaning process of the measuring device surface in the solar plant.

According to another embodiment of the invention, the at least one position sensor is one of an inductive sensor, an optical sensor, an ultrasonic sensor, or any sensor that allows the position of an object to be determined.

According to another embodiment of the invention, the device also comprises at least one cover to cover the at least one first driving means, protecting it from severe weather and / or other elements that may affect the operation of this component.

According to another embodiment of the invention, the device further comprises at least one extension element attached at one of its ends to the end of the at least one movable arm, and at its other end to the end of the at least one first driving means so as to extend and contract vertically to bring the at least one cleaning element closer to or further away from the surface of the at least one measuring device. The incorporation of this element allows to include an additional degree of freedom in the operation of the cleaning device, should it be necessary to reach the location of the measuring device surface with the cleaning element.

According to another embodiment of the invention, the device further comprises at least a third driving means arranged at one of the ends of the at least one extension element to allow the vertical extension and contraction of said at least one extension element.

According to another embodiment of the invention, the device further comprises at least one rotation element arranged on the at least one base platform so that the at least one movable arm is arranged on said at least one rotation element, allowing the rotation of the at least one movable arm about its own axis from an initial position to a final position on the surface of the measuring device. The incorporation of this element allows to include another additional degree of freedom in the operation of the cleaning device in case it is necessary to move it in this way due to the operating conditions of the solar plant.

According to another embodiment of the invention, the device further comprises at least a fourth driving means arranged on the at least one rotating element to allow the rotation of the at least one movable arm arranged on said at least one element rotation.

According to another embodiment of the invention, the device further comprises at least one of a temperature sensor, a humidity sensor, a rain sensor, a wind speed sensor and / or a camera. The measurements made by these sensors and / or the images captured by the camera are transmitted by the control means of the cleaning device to a control center, wherein an operator can review these measurements to evaluate whether to send an instruction to perform a cleaning on the spot or to schedule a cleaning of the measuring device.

According to another embodiment of the invention, the at least one control means further comprises at least one wireless communication element which receives climatological information from the device place of operation and / or operating instructions for the device. This allows the device to receive the weather information from a cloud or a control center in order to make the cleaning decision through the control means.

According to another embodiment of the invention, the at least one control means further comprises at least one clock to be able to program one or more cleaning of the measuring device.

According to another embodiment of the invention, the device further comprises at least one liquid dispensing means which is capable of dispensing at least one of water and / or a cleaning agent onto the surface of the at least one measuring device. Optionally, the device further comprises at least one ventilation means, such as a fan or compressor which is capable of dispensing compressed air onto the surface of the at least one measuring device. Said embodiments allow the cleaning device to have additional cleaning means in case it is necessary to use more than one treatment on the surface of the measuring device to effectively remove the dirt.

According to another embodiment of the invention, the device further comprises at least one energy storage element to provide electrical energy at least a first driving means and at least one second driving means wherein the at least one energy storage element corresponds to a rechargeable lead acid battery, rechargeable lithium battery or any material or combination of materials capable of storing electrochemical energy.

According to another embodiment of the invention, the at least one energy storage element receives energy for its accumulation from at least one solar panel which may correspond to a solar panel of the same solar plant.

According to another embodiment of the invention, the device further comprises at least one self-cleaning means for cleaning the at least one cleaning element. This allows the cleaning device to keep at least one cleaning element free of dirt and impurities that could reduce the efficiency of the cleaning tasks on the surface of the measuring device.

According to another embodiment of the invention, the device further comprises at least one replacement means to replace the at least one cleaning element. Said embodiment of the invention allows the at least one cleaning element to be replaced in case it suffers any damage or its useful life has come to an end, among other possible reasons for replacement.

According to another embodiment of the invention, the device also comprises at least one means of data acquisition and communication to obtain operating data of each of the components of the cleaning device and to communicate them to an operations center and / or to a data cloud for storage. This allows to have a complete control of the operation and functioning of the cleaning device as a whole and of each one of its components, by obtaining operation data for each one of them. In addition, the at least one data acquisition and communication means can send an alert in the event that any of the parameters measured for one or more of the cleaning device components is out of a pre-established range allowing an operator to take the pertinent measures either remotely or in person to solve the detected problem.

On the other hand, according to a second preferred embodiment of the invention a cleaning method is also described to automatically clean the surface of at least one measuring device in solar installations, comprising the steps of
a) actuating at least one second driving means through at least one control means;
b) mobilizing at least one movable arm arranged on at least one base platform from an initial position to a final position in which at least one cleaning element makes contact with the surface of the at least one measuring device;
c) actuating at least one first driving means through the at least one control means;
d) initiating a rotary movement of the at least one cleaning element in order to proceed with the cleaning of the at least one measuring device surface;
e) stopping the at least one first driving means through the at least one control means finalizing the rotary movement of the at least one cleaning element;
f) mobilizing the at least one movable arm from the final position to the initial position; and
g) stopping the at least one second driving means through the at least one control means.

According to another embodiment of the invention, the method further comprises, before activating the at least one second driving means receiving a wireless signal in the at least one control means indicating that the cleaning of the at least one measuring device surface should be initiated. This signal can be sent by an operator from a remote control center or sent by the same control center automatically.

According to another embodiment of the invention the method further comprises, before activating the at least one second driving means activating a time alarm in the at least one control means indicating that it is the time programmed in which the cleaning of the at least one measuring device surface should be started.

According to another embodiment of the invention the method further comprises, before actuating the at least one second driving means, verifying that the at least one movable arm is in the initial position through at least one position sensor. Optionally, the method further comprises repositioning the at least one movable arm to the initial position, if the at least one position sensor detects that said at least one movable arm is in a different position than the initial position.

According to another embodiment of the invention the method further comprises, before starting the rotary movement of the at least one cleaning element verifying that the at least one movable arm is in the final position through the at least one position sensor. Optionally, the method further comprises repositioning the at least one movable arm to the final position, if the at least one position sensor detects that said at least one movable arm is in a different position than the final position.

Thanks to the use of position sensors, it is possible to avoid a malfunction of the cleaning device due to an incorrect location of the movable arm being possible to always check its location, so as to be able to take the corresponding corrective actions in case that it is incorrectly positioned.

According to another embodiment of the invention the method further comprises, after starting the rotary movement of the at least one cleaning element, repeatedly moving the at least one movable arm from the end position to a scanning position, prior to the end position, the position of the at least one movable arm in said end and scanning positions being controlled by the at least one position sensor. Said angular movement of the movable arm allows the cleaning element to cover the entire surface of the measuring device wherein said range of movement of the movable arm can be adjusted depending on the extent of the upper surface of the measuring device that requires cleaning.

According to another embodiment of the invention the method further comprises, before actuating the at least one first driving means, stopping the at least one second driving means through the at least one control means; and before mobilizing the at least one movable arm from the final position to the initial position, actuating the at least one second driving means through the at least one control means. This embodiment makes it possible to keep the second driving means off once the movable arm is in the upper position performing the cleaning operations contributing to saving energy in the cleaning device.

According to another embodiment of the invention the method further comprises, before actuating the at least one first driving means, actuating at least one third driving means through the least one control means; and mobilizing at least one extension element to a position in which at least one cleaning element contacts the surface of the at least one measuring device.

According to another embodiment of the invention the method further comprises, before actuating the at least one second driving means, actuating at least a fourth driving means through the least one control means; and rotating at least one rotary element from an initial position to a position in which at least one cleaning element is disposed on or in contact with the surface of the at least one measuring device.

As mentioned above, the two embodiments already described allow the cleaning device to include one or two additional degrees of freedom in the operation of the movable arm, if necessary depending on the specific location of the measuring device in the solar plant.

According to another embodiment of the invention the method further comprises, before actuating the at least one first driving means, dispensing water and / or a cleaning agent onto the surface of the at least one measuring device through the at least one liquid dispensing means. Optionally, the method further comprises before actuating the at least one first driving means, dispensing compressed air onto the surface of the at least one measuring device through at least one ventilation means such as a fan or compressor. These embodiments make it possible to combine several cleaning treatments in case it is necessary, either due to a particular climatic event or due to the particular conditions of the place of operation of the measuring device.

According to another embodiment of the invention, the method further comprises cleaning the at least one cleaning element through at least one self-cleaning means. Additionally, the method further comprises replacing the at least one cleaning element through at least one replacement means.

According to another embodiment of the invention the method further comprises obtaining operating data of each of the components of the cleaning device through at least one means of data acquisition and communication; and communicating said operating data to an operations center and / or a cloud for storage. Such data communication can be done through cables or wirelessly, using Bluetooth, infrared, 3G, 4G, 5G technology or through any other means that allows wireless communication. Preferably, the method further comprises comparing by means of the at least one data acquisition and communication means, the data acquired for each component of the cleaning device with at least one preset range for each data; and sending an alert in case one or more of the acquired data is out of the pre-established range. Thanks to this embodiment of the invention it is possible to monitor in real time the operation of all the components of the cleaning device, constantly evaluating the correct operation of each one of them where, in case of detecting that one or more parameters are out a pre-established range, the at least one data acquisition and communication means is responsible for sending an alert either to an operations center or through text messages or similar, for an operator to take the corresponding corrective measures either remotely or in person.

According to another embodiment of the invention the method further comprises feedback of the at least one control means with the information obtained by the at least one data acquisition and communication means, to use said information in the evaluation of the next actions. In this sense, the cleaning device of the invention uses functions related to machine learning and the internet of things to provide feedback to the at least one control means thus ensuring that the cleaning device has the ability to learn from its past decisions, in order to improve the accuracy level in decision making in each of the cleaning process stages, for example, in estimating the date when cleaning is necessary or the duration that the cleaning of the surface should have, among others. In addition, thanks to the implementation of these learning tools the cleaning device can interact with other cleaning devices that are operating in the solar plant, to generate a coordinated work between all of them, for example, there may be interactions of the master-slave type wherein one of the cleaning devices acts as the main operator within a set of devices.

In view of the previous description regarding the cleaning device and method of the invention, it is relevant to highlight the different preferred embodiments that can be integrated into the cleaning process of the measuring device depending on its location and the number of accessories or elements of the solar plant present in the place. In addition, depending on the weather conditions of the site of operation it is possible to combine one or more cleaning treatments on the surface of the measuring device, to ensure a correct cleaning of its surface specifically of the transparent dome in the case of pyranometers keeping the measurement accuracy of solar irradiance.

On the other hand, it is relevant to mention the operating characteristics of the cleaning device of the invention which can operate remotely either by programming to operate cyclically or for the device itself to make decisions regarding cleaning tasks. The latter completely avoids the presence of people in the solar plant except for installation or maintenance tasks which is highly desired in this industry due to the costs involved in moving personnel to the plant locations which generally they are at considerable distances from large cities.

Finally, it is important to emphasize the simplicity of installation and operation of the cleaning device of the invention, which makes it possible to use it together with most of the measurement devices commonly used in solar installations, such as pyranometers for which there are several brands and models in the market, thanks to the scalability of its components wherein maintenance work is minimal due to the existence of a small number of sensitive electrical components or that require a specific calibration.

Consequently, the present invention provides an automatic cleaning device and method for the surface of measuring devices in solar installations, such as pyranometers which provides a simpler solution than those existing in the state of the art, able to adapt to the particular requirements of each pyranometer model without intervening in its operation or in its structural components but always maintaining the appropriate level of cleaning to maintain the measurement efficiency of the measuring device.

### BRIEF DESCRIPTION OF THE FIGURES

As part of the present invention, the following representative figures thereof are presented which teach preferred configurations of the invention and, therefore, should not be considered as limiting the definition of the claimed matter.
Figure 1 shows an isometric view of the cleaning device according to a preferred configuration of the invention.
Figure 2 shows a side view of the cleaning device according to a preferred configuration of the invention.
Figure 3 shows a front view of the cleaning device according to a preferred configuration of the invention.

### DETAILED DESCRIPTION OF THE FIGURES

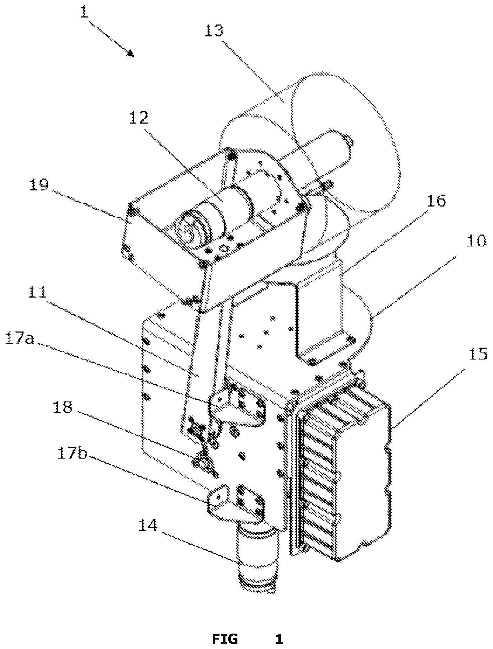

With reference to the accompanying Figures, Figure 1 shows an isometric view of the cleaning device (1) wherein it is possible to observe all its main components. On the one hand, it is observed that the device (1) comprises a base platform (10) in which a support base (16) is positioned where the pyranometer is placed. On one of the side faces of the base platform (10) there is an end of a movable arm (11) which can be moved from an initial position to a final position thanks to a second driving means (14), such as a servomotor or stepper motor arranged in the lower part of the device (1). These positions are established and ensured by installing travel stops (17a, 17b) arranged on the same side face of the base platform (10). In this way, the arm will always make contact with one of the travel stops (17a, 17b) when reaching its initial or final position. On the other hand, it is observed that the device (1) also comprises two position sensors (18) (in the Figures only one position sensor is observed; the other is hidden by the movable arm (11)) also positioned in the lateral face of the base platform (10) in order to check the position of the movable arm (11) thus ensuring that it is always in its initial position or in its final position.

Figure 1 also shows the presence of a first driving means (12), such as a stepper motor or servomotor which is protected by a cover (19). Said first driving means (12) has the function of rotating a cleaning element (13), such as a brush to carry out cleaning tasks on the surface of the measuring device specifically on the transparent dome in the case of a pyranometer.

Finally, the device (1) also comprises control means (15) arranged on another side face of the base platform (10) which controls the operation of the first driving means (12) and the second driving means (14) through instructions received wirelessly from a remotely located operator or through instructions directly evaluated by the control means (15).

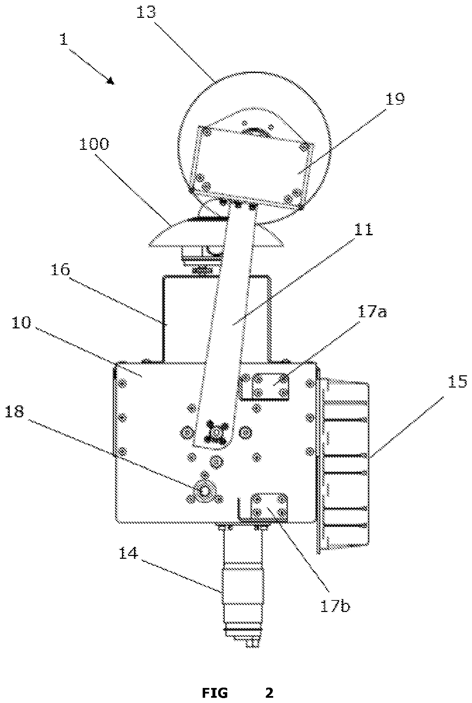

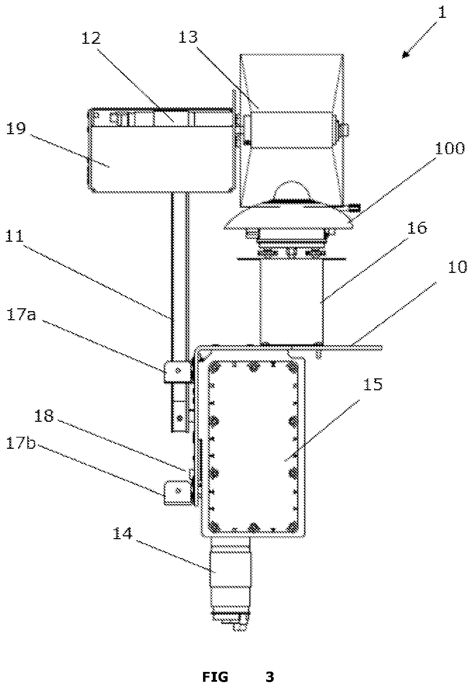

In relation to Figures 2 and 3, there is a side and front view of the cleaning device (1) with the movable arm (11) in its final position resting against the travel stop (17a) wherein it is also possible to appreciate the arrangement of the measuring device to which the cleaning tasks will be applied on its upper surface, in this case corresponding to a pyranometer (100) which is located on the support base (16). This is the arrangement of the cleaning device (1) before starting with the respective cleaning tasks on the surface of the pyranometer (100) after which the movable arm (11) returns to its initial position to contact the travel stop (17b) said positions being checked by the position sensor (18).

From the Figures it is possible to notice the adaptability of the cleaning device (1) wherein most of its components, such as the base platform (10), the movable arm (11), the cleaning element (13), the support base (16) and the travel stops (17a, 17b) can be modified in terms of their location or dimensions, so as to adapt to any operating environment or pyranometer model existing in the market without affecting the operation or the components of the pyranometer. On the other hand, the cleaning device (1) can also be made more complex to include one or more additional functions to fulfill an efficient cleaning in a particular operating environment, wherein, for example, the dome of the pyranometer becomes dirty more frequently or with particles that are difficult to remove.

Additionally, it is important to highlight the versatility of the cleaning device (1) in relation to the number of degrees of freedom it can have depending on the specific mobility requirements of each place of installation and operation, wherein the cleaning device (1) has mainly two degrees of freedom, the first associated with the movement of the movable arm (11) around the pyranometer (100) on its axial axis, and the second associated with the rotation of the cleaning element (13) to carry out cleaning tasks on the surface of the pyranometer (100) which are actuated through the first and second driving means (12, 14). The aforementioned degrees of freedom may include additional ones, such as for example, the extension or contraction of an extension element to bring the cleaning element (13) closer to or further away from the surface of the pyranometer (100) if necessary, or the rotation of the movable arm (11) in relation to its radial axis through a rotation element that allows said movement of the movable arm (11) around the pyranometer (100). Said additional degrees of freedom can be actuated passively (through an operator, for example) or actively through additional driving means (third and fourth driving means) thus providing a cleaning device (1) versatile and adaptable to any operating or movement conditions.

### NUMERICAL REFERENCES

1 Device for cleaning the surface of at least one pyranometer
10 Base platform
11 Movable arm
12 First driving means
13 Cleaning element
14 Second driving means
15 Control means
16 Support base
17a, 17b Travel stop
18 Position sensor
19 Cover

## Claims

1. A device (1) to automatically clean the surface of at least one measuring device (100) used in solar installations, **CHARACTERIZED in that** it comprises:
- at least one base platform (10);
- at least one mobile arm (11) attached to the at least one base platform (10);
- at least one first driving means (12) attached to one end of the at least one movable arm (11);
- at least one cleaning element (13) to clean the surface of the at least one measuring device (100) and connected to one end of the at least one first driving means (12), to allow its rotation;
- at least one second driving means (14) to allow the rotation of the at least one movable arm (11) around the at least one measuring device (100); and
- at least one control means (15) to control the operation of the at least one first driving means (12) and of the at least one second driving means (14).

2. The device (1) according to claim 1, **CHARACTERIZED in that** it also comprises at least one support base (16) arranged on the at least one base platform (10) to locate the at least one measuring device (100).

3. The device (1) according to claim 1, **CHARACTERIZED in that** the at least one cleaning element (13) corresponds to at least one of a brush, a cloth or any element that allows cleaning a surface.

4. The device (1) according to claim 1, **CHARACTERIZED in that** the at least one mobile arm (11) is attached to the at least one base platform (10), in such a way as to allow its rotation along the transverse axis of the at least one measuring device (100).

5. The device (1) according to claim 1, **CHARACTERIZED in that** the at least one mobile arm (11) is attached to the at least one base platform (10) in such a way as to allow its rotation along the axial axis of the at least one measuring device (100).

6. The device (1) according to claim 1, **CHARACTERIZED in that** it further comprises at least two travel stop elements (17a, 17b) arranged on a side face of the at least one base platform (10).

7. The device (1) according to claim 1, **CHARACTERIZED in that** it further comprises at least one position sensor (18) arranged on a side face of the at least one base platform (10).

8. The device (1) according to claim 7, **CHARACTERIZED in that** the at least one position sensor (18) is one of an inductive sensor, an optical sensor, an ultrasonic sensor or any sensor that allows to determine the position of an object.

9. The device (1) according to claim 1, **CHARACTERIZED in that** it further comprises at least two position sensors (18) arranged on a side face of the at least one base platform (10).

10. The device (1) according to claim 9, **CHARACTERIZED in that** the at least two position sensors (18) are one or more of an inductive sensor, an optical sensor, an ultrasonic sensor or any sensor that allows to determine the position of an object.

11. The device (1) according to claim 1, **CHARACTERIZED in that** it further comprises at least one cover (19) to cover the at least one first driving means (12).

12. The device (1) according to claim 1, **CHARACTERIZED in that** it also comprises at least one extension element joined at one of its ends to the end of the at least one mobile arm (11) and at its other end to the end of the at least one first driving means (12), so as to extend and contract vertically to bring the at least one cleaning element (13) closer or farther away from the surface of the at least one measuring device (100).

13. The device (1) according to claim 12, **CHARACTERIZED in that** it also comprises at least a third driving means arranged at one of the ends of the at least one extension element to allow the vertical extension and contraction of said at least one extension element.

14. The device (1) according to claim 1, **CHARACTERIZED in that** it further comprises at least one rotation element arranged on the at least one base platform (10) so that the at least one mobile arm (11) is arranged on said at least one rotation element allowing the rotation of the at least one movable arm (11) on its own axis from an initial position to a final position on the surface of the measuring device (100).

15. The device (1) according to claim 14, **CHARACTERIZED in that** it further comprises at least a fourth driving means arranged on the at least one rotation element to allow the rotation of the at least one mobile arm (11) arranged on said at least one element of rotation.

16. The device (1) according to claim 1, **CHARACTERIZED in that** it further comprises at least one of a temperature sensor, a humidity sensor, a rain sensor, a wind speed sensor and / or a camera.

17. The device (1) according to claim 1, **CHARACTERIZED in that** the at least one control means (15) further comprises at least one wireless communication element which receives climatological information from the place of operation of the device (1) and / or device operating instructions (1).

18. The device (1) according to claim 1, **CHARACTERIZED in that** the at least one control means (15) further comprises at least one clock.

19. The device (1) according to claim 1, **CHARACTERIZED in that** it further comprises at least one liquid dispensing means which is capable of dispensing at least one of water and / or a cleaning agent on the surface of the at least one measuring device (100).

20. The device (1) according to claim 1, **CHARACTERIZED in that** it also comprises at least one ventilation means, such as a fan or a compressor, which is capable of dispensing compressed air on the surface of the at least one measurement device (100).

21. The device (1) according to claim 1, **CHARACTERIZED in that** it also comprises at least one energy storage element to provide electrical energy to at least one first driving means (12) and the at least one second driving means (14).

22. The device (1) according to claim 21, **CHARACTERIZED in that** the at least one energy storage element corresponds to a rechargeable battery of lead-acid, lithium or any material or combination of materials capable of storing electrochemical energy.

23. The device (1) according to claim 21, **CHARACTERIZED in that** the at least one energy accumulation element receives energy for its accumulation from at least one solar panel.

24. The device (1) according to claim 1, **CHARACTERIZED in that** it further comprises at least one self-cleaning means for cleaning the at least one cleaning element (13).

25. The device (1) according to claim 1, **CHARACTERIZED in that** it further comprises at least one replacement means to replace the at least one cleaning element (13).

26. The device (1) according to claim 1, **CHARACTERIZED in that** it also comprises at least one data acquisition and communication means to obtain operating data of each of the cleaning device (1) components and to communicate them to an operations center and / or a data cloud for storage.

27. A cleaning method to automatically clean the surface of at least one measuring device (100) in solar installations, **CHARACTERIZED in that** it comprises the steps of
a) actuating at least one second driving means (14) through at least one control means (15);
b) mobilizing at least one mobile arm (11) arranged on at least one base platform (10) from an initial position to a final position in which at least one cleaning element (13) makes contact with the surface of the at least one measuring device (100);
c) actuating at least one first driving means (12) through the at least one control means (15);
d) initiating a rotary movement of the at least one cleaning element (13) in order to start cleaning the surface of the at least one measuring device (100);
e) stopping the at least one first driving means (12) through the at least one control means (15) ending the rotary movement of the at least one cleaning element (13);
f) mobilizing the at least one movable arm (11) from the final position to the initial position; and
g) stopping the at least one second driving means (14) through the at least one control means (15).

28. The method according to claim 27, **CHARACTERIZED in that** it further comprises, before actuating the at least one second driving means (14), receiving a wireless signal in the at least one control means (15) indicating that the cleaning of the surface of the at least one measuring device (100) should start.

29. The method according to claim 27, **CHARACTERIZED in that** it further comprises, before actuating the at least one second driving means (14), activating a time alarm in the at least one control means (15), indicating that it is the scheduled time when cleaning the surface of the at least one measuring device (100) should start.

30. The method according to claim 27, **CHARACTERIZED in that** it further comprises, before actuating the at least one second driving means (14), confirming that the at least one movable arm (11) is in the initial position through the at least one position sensor (18).

31. The method according to claim 30, **CHARACTERIZED in that** it further comprises repositioning the at least one mobile arm (11) to the initial position, if the at least one position sensor (18) detects that said at least one movable arm (11) is in a different position than the initial one.

32. The method according to claim 27, **CHARACTERIZED in that** it further comprises, before starting the rotary movement of the at least one cleaning element (13), confirming that the at least one mobile arm (11) is in a final position through the at least one position sensor (18).

33. The method according to claim 32, **CHARACTERIZED in that** it further comprises repositioning the at least one mobile arm (11) to the final position, if the at least one position sensor (18) detects that said at least one movable arm (11) is in a different position than the end position.

34. The method according to claim 33, **CHARACTERIZED in that** it further comprises, after starting the rotary movement of the at least one cleaning element (13), repeatedly move the at least one movable arm (11) from the final position up to a scanning position, prior to the end position, the position of the at least one movable arm (11) being controlled in said end and scanning positions by the at least one position sensor (18).

35. The method according to claim 27, **CHARACTERIZED in that** it further comprises:
before actuating the at least one first driving means (12), stopping the at least one second driving means (14) through the at least one control means (15); and
before mobilizing the at least one mobile arm (11) from the final position to the initial position, actuating the at least one second driving means (14) through the at least one control means (15).

36. The method according to claim 27, **CHARACTERIZED in that** it further comprises, before actuating the at least one first driving means (12), actuating at least one third driving means through the least one control means (15); and mobilizing at least one extension element to a position in which the at least one cleaning element (13) contacts the surface of the at least one measuring device (100).

37. The method according to claim 27, **CHARACTERIZED in that** it further comprises, before actuating the at least one second driving means (14), actuating at least a fourth driving means through the least one control means (15); and rotating at least one rotating element from an initial position to a position in which the at least one cleaning element (13) is arranged on or in contact with the surface of the at least one measuring device (100).

38. The method according to claim 27, **CHARACTERIZED in that** it further comprises, before actuating the at least one first driving means (12), dispensing water and / or a cleaning agent on the surface of the at least one measuring device (100) through at least one liquid dispensing means.

39. The method according to claim 27, **CHARACTERIZED in that** it further comprises, before actuating the at least one first driving means (12), dispensing compressed air on the surface of the at least one measuring device (100) through the at least one means of ventilation, such as a fan or compressor.

40. The method according to claim 27, **CHARACTERIZED in that** it further comprises cleaning the at least one cleaning element (13) through at least one self-cleaning means.

41. The method according to claim 27, **CHARACTERIZED in that** it further comprises replacing the at least one cleaning element (13) through at least one replacement means.

42. The method according to claim 27, **CHARACTERIZED in that** it further comprises obtaining operating data of each of the components of the cleaning device through at least one data acquisition and communication means; and communicating said operating data to an operations center and / or a data cloud for storage.

43. The method according to claim 42, **CHARACTERIZED in that** it further comprises comparing, by means of the at least one data acquisition and communication means, the data acquired for each component of the cleaning device with at least a preset range for each data; and send an alert in case one or more of the acquired data is outside the pre-established range.

44. The method according to claim 43, **CHARACTERIZED in that** it further comprises feedback of the at least one control means, with the information obtained by the at least one data acquisition and communication means, in order to use said information in the assessment of the next actions.
